# EUROPÄISCHE PATENTSCHRIFT

(11) **EP 0 791 614 B1**
(45) Veröffentlichungstag und Bekanntmachung des Hinweises auf die Patenterteilung: **21.04.2004**
(21) Anmeldenummer: 97102495.5
(22) Anmeldetag: 15.02.1997
(51) Int. Cl.: C08G 18/42, C09D 175/06, C08G 63/20

(54) **Verwendung urethanisierter Polyester als Additiv für wässrige Lacksysteme**
Use of urethanised polyester as an additive for aqueous coating compositions
Utilisation des polyesters uréthanisés comme additif pour des compositions de revêtement aqueuses

(30) Priorität: 23.02.1996 DE 19606783
(43) Veröffentlichungstag der Anmeldung: 27.08.1997
(73) Patentinhaber: BASF Coatings Aktiengesellschaft, 48165 Münster (DE)
(72) Erfinder: Block, Vera, 59199 Bönen (DE); Borgholte, Harald, Dr., 48151 Münster (DE); Meisenburg, Uwe, Dr., 47259 Duisburg (DE); Rink, Heinz-Peter, Dr., 48153 Münster (DE); Moorkamp, Ludwig, 48165 Münster (DE)
(74) Vertreter: Fitzner, Uwe, Dr.

(56) Entgegenhaltungen:
- EP-A- 0 036 975
- EP-A- 0 427 028
- DE-A- 3 532 864
- US-A- 4 151 152

## Beschreibung

Die vorliegende Erfindung betrifft die Verwendung eines urethanisierten Polyesters als Additiv für Lackzubereitungen, insbesondere wäßrige Lackzubereitungen und der die Stabilität dieser Lacke in großtechnischen Anlagen verbessert.

Aus der EP 0 427 028 A1 ist die Verwendung urethanisierter Polyester als Einbrennfüllerbindemittel bekannt. In der DE 35 32 864 A1 werden sie als Decklacke eingesetzt. Ferner können sie auch als Klarlacke verwendet werden, wie in der EP 0 036 975 A1 oder US 4,151,152 beschrieben.

Bei der großtechnischen Lackierung von Substraten, insbesondere Metallsubstraten wie Automobilkarosserien, Gefäße etc., werden die Lacksysteme üblicherweise aus Vorratsbehältem über Leitungssysteme in die Lackierapparatur geleitet. Werden beispielsweise 2-Komponenten-Systeme aus Lack und Härter eingesetzt, werden diese aus getrennten Vorratsbehältern über sogenannte Ringleitungen geführt, an denen die Komponenten an beliebigen Stellen entnommen werden können.

Beim Transport über diese Ringleitungen treten in den Lackkomponenten Schergefälle und Unterschiede in den Strömungsgeschwindigkeiten auf. Es wurde festgestellt, daß diese zu einer Instabilität der Lacksysteme führen und das Erscheinungsbild der aufgebrachten und eingebrannten Lacke beeinträchtigt wird.

Der vorliegenden Erfindung lag demgemäß die Aufgabe zugrunde, ein Additiv für Lacksysteme, insbesondere wäßrige Lacksysteme, zur Verfügung zu stellen, die die Stabilität von Lacken, die durch großtechnische Anlagen, insbesondere über Leitungen (Ringleitungen) geführt werden, zu verbessem.

Gegenstand der vorliegenden Erfindung ist die Verwendung eines urethanisierten Polyesters als Additiv für wäßrige Lacksysteme, der dadurch erhältlich ist, daß in einer Reaktionsstufe (A) (a) 10 bis 45 Mol-% eines oder mehrerer Diole,
(b) 5 bis 50 Mol-% eines oder mehrerer Polyole mit mindestens 3 OH-Gruppen und
(c) 35 bis 47 Mol-% einer oder mehrerer aromatischer, aliphatischer oder cycloaliphatischer Polycarbonsäuren und/oder deren reaktiven Derivate in an sich bekannter Weise einer Polykondensationsreaktion unterworfen werden bis das Reaktionsgemisch eine Säurezahl von 1 bis 10 aufweist, und das erhaltene Reaktionsprodukt in einer Reaktionsstufe (B) in an sich bekannter Weise mit einem oder mehreren organischen Polyisocyanat(en) umgesetzt wird.

Überraschenderweise wurde festgestellt, daß der urethanisierte Polyester sich hervorragend als Additiv für wäßrige Lacke zur Verbesserung der rheologischen Stabilisierung von Lacken eignet. Durch Zusatz der erfindungsgemäßen Polyester wird das Rheologieverhalten der Lacksysteme derart verändert, daß selbst Längsbeanspruchungen der Lacke durch Scherungen in der Ringleitung kein signifikanter Viskositätsabfall auftritt, der zu schlechten Lackierergebnissen führen würde.

Bei dem Verfahren zur Herstellung der urethanisierten Potyester, werden in einer Reaktionsstufe (A)
(a) 10 bis 45 Mol-% einer oder mehrerer Diole,
(b) 5 bis 50 Mol-% einer oder mehrerer Polyole mit mindestens 3 OH-Gruppen und
(c) 35 bis 47 Mol-% einer oder mehrerer aromatischer, aliphatischer oder cycloaliphatischer Polycarbonsäuren und/oder deren reaktiven Derivate
in an sich bekannter Weise einer Polykondensationsreaktion unterworfen bis das Reaktionsgemisch eine Säurezahl von 1 bis 10 aufweist, und das erhaltene Reaktionsprodukt in einer Reaktionsstufe (B) in an sich bekannter Weise mit einem oder mehreren organischen Polyisocyanat(en) umgesetzt wird.

Die zur Herstellung der Polyester verwendeten Polyole bestehen beispielsweise aus Alkylenglykolen, wie Ethylenglykol, Propylenglykol, Butylenglykol, Butandiol-1,4, Hexandiol-1,6, Neopentylglykol, Hydroxypivalinsäureneopentylglykolester und Diolen wie Dimethylolcyclohexan. Ferner sind auch aliphatische Polyetherdiole, wie lineare oder verzweigte Poly(oxyethylen)glykole, Poly(oxypropylen)glykole und/oder Poly(Oxybutylen)glykole und gemischte Polyetherdiole wie Poly(oxyethylenoxypropylen)glykole geeignet. Die Polyetherdiole haben üblicherweise eine Molmasse Mn von 400 bis 3000.

Ferner können als Diole auch aromatische oder alkylaromatische Diole eingesetzt werden, wie z. B. 2-Alkyl-2-phenyl-propan-1,3-diol, Bisphenol-Derivate mit Etherfunktionalität usw.

Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure.

Die Diole können allein oder als Gemisch aus verschiedenen Diolen eingesetzt werden.

Als weiterer Reaktionspartner in der Reaktionsstufe (A) werden Polyole mit mindestens 3 OH-Gruppen zugesetzt. Beispiele für Polyole mit mindestens 3 OH-Gruppen sind Trimethylolethan, Trimethylolpropan, Glycerin, Pentaerythrit, Dipentaerythrit, Trishydroxyethylisocyanat, 1,2,4 Butandiol, Propan- und Hexan-Triole, Trihydroxycarbonsäuren, wie Trishydroxymethyl(ethyl)ethansäuren.

Die Polyole mit mindestens 3 OH-Gruppen können allein oder als Gemisch eingesetzt werden.

Beispiele für Polycarbonsäuren, die als Komponenten (c) eingesetzt werden können, seien aromatische, aliphatische und cycloaliphatische Polycarbonsäuren genannt. Bevorzugt werden als Komponente (c) aromatische und/oder aliphatische Polycarbonsäuren eingesetzt. Als reaktive Derivate können sind insbesondere die Anhydride zu nennen, sofern sie existieren.

Beispiele für geeignete Polycarbonsäuren sind Phthalsäure, Isophthalsäure, Terephthalsäure, Halogenphthalsäure, wie Tetrachlor- bzw. Tetrabromphthalsäure, Adipinsäure, Glutarsäure, Acelainsäure, Sebacinsäure, Fumarsäure, Pyromellithsäure, Maleinsäure, Trimellithsäure, Promellithsäure, Tetrahydrophthalsäure, Hexahydrophthalsäure, 1,2-Cyclohexandicarbonsäre, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endomethylenhexahydrophthalsäure, Camphersäure, Cyclohexantetracarbonsäure, Cyclobutantetracarbonsäure u.a. Die cycloaliphatischen Polycarbonsäuren können sowohl in ihrer cis- als auch in ihrer trans-Form sowie als Gemisch beider Formen eingesetzt werden. Geeignet sind auch die veresterungsfähigen Derivate der oben genannten Polycarbonsäuren, wie z.B. deren ein- oder mehrwertige Ester mit aliphatischen Alkoholen mit 1 bis 4 C-Atomen oder Hydroxyalkoholen mit 1 bis 4 C-Atomen.

Die Komponenten (a), (b) und (c) werden vorzugsweise in solchen MolVerhältnissen eingesetzt, daß die Polyol-Bausteine, d.h. die Diole und die Polyole mit mindestens 3 OH-Gruppen insgesamt, und die Summe der Polycarbonsäure-Bausteine in einem Verhältnis von 0,8 : 1 bis 1,6 : 1 eingesetzt werden.

Die Herstellung des Polyesters in Schritt (A) erfolgt nach den bekannten Methoden der Veresterung (Vgl. verschiedene Standardwerke, wie z.B.:
1. Temple C. Patton, Alkyd Resin Technology, Interscience Publishers John Wiley & Sons, New York, London 1962;
2. Dr. Johannes Scheiber, Chemie und Technologie der künstlichen Harze, Wissenschaftliche Verlagsgesellschaft mbH., Stuttgart, 1943;
3. Hans Wagner + Hans-Friedrich Sarx, Lackkunstharze, 4. Auflage, Cart Hanser Verlag, München, 1959;
4. Ullmanns Encyklopädie der technischen Chemie, Band 14, Seiten 80 bis 106 (1963).

Die Umsetzung erfolgt dabei üblicherweise bei Temperaturen zwischen 180 und 280° C, gegebenenfalls in Gegenwart eines geeigneten Versterungskatalysators, wie z.B. Lithiumoctoat, Dibutylzinnoxid, Dibutylzinndilaurat, p-Toluolsulfonsäure u.ä.

Üblicherweise wird die Herstellung der Polyester in Schritt (A) in Gegenwart geringer Mengen eines geeigneten Lösungsmittels als Schleppmittel durchgeführt. Als Schleppmittel werden z.B. aromatische Kohlenwasserstoffe, wie insbesondere Xylol und (cyclo)aliphatische Kohlenwasserstoffe, z.B. Cyclohexan, eingesetzt.

Die Kondensationsreaktion wird vorzugsweise bis zu einem Umsatz durchgeführt, daß das Reaktionsgemisch eine Säurezahl von etwa 1 bis 10, vorzugsweise 1 bis 5, aufweist. Die Kondensationsprodukte können linear oder verzweigt sein.

Der im Reaktionsschritt (A) erhaltene Polyester wird vor der weiteren Umsetzung mit einem organischen Isocyanat mit einem Lösemittel, das vorteilhafterweise nicht in die Reaktion eingreift, auf einen Festkörpergehalt von 50 bis 90 % angelöst. Als Lösemittel eignen sich u.a. Glykolether wie Ethylenglykoldimethylether, Glykoletherester, wie Ethylglykolacetat, Butylglykolacetat, 3-Metoxy-n-butylacetat, Butyldiglykolacetat, Methoxypropylacetat, Ester wie Butylacetat, Isobutylacetat, Amylacetat, Ketone wie Methylethylketon, Methylisobutylketon, Diisobutylketon, Cyclohexanon und Isophoron. Darüber hinaus können auch aromatische Kohlenwasserstoffe, wie Xylol und aliphatische Kohlenwasserstoffe eingesetzt werden.

Im Reaktionsschritt (B) wird der in (A) erhaltene Polyester in an sich bekannter Weise mit einem organischen Polyisocyanat umgesetzt, d.h. urethanisiert. Als Polyisocyanatkomponente können beliebige organische Polyisocyanate mit aliphatisch, cycloaliphatisch, araliphatisch und/oder aromatisch gebundenen, freien Isocyanatgruppen verwendet werden. Bevorzugt werden Polyisocyanate mit 2 bis 5 Isocyanatgruppen pro Molekül eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern. Als Zusatzmittel geeignete Lösemittel für die Polyisocyanate sind beispielsweise Ethoxyethylpropionat, Butylacetat und ähnliches.

Beispiele für geeignete Isocyanate sind in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben.

Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und 1,4-diisocyanat, 2,2- und 2,6-Diisocyanato-1-methylcyclohexan, 3-Isocyanatomethyl-3,5,5-trimethylcyclohexylisocyanat ("Isophorondiisocyanat"), 2,5- und 3,5-Bis(isocyanatomethyl)-8-methyl-1,4-methano-decahydronaphthalin, 1,5-, 2,5-1,6- und 2,6-Bis(isocyanato)-4,7-methanohexahydroindan, Dicyclohexyl-2,4'- und 4,4'-diisocyanat, 2,4- und 2,6-Hexahydrotoluylendiisocyanat Perhydro-2,4'- und 4,4'-diphenylmethandiisocyanat, ω,ω'-Diisocyanato-1,4-diethylbenzol, 1,3- und 1,4-Phenylendiisocyanat, 4,4'-Diisocyanato-diphenyl, 4,4'-Diisocyanato-3,3'dichlorodiphenyl, 4,4'-Diisocyanato-3,3'-dimethoxy-diphenyl, 4,4'-Diisocyanato-3,3'-dimethyl-diphenyl, 4,4'-Diisocyanato-3,3'-diphenyl-diphenyl, 2,4'- und 4,4'-Diisocyanato-diphenyl-methan, Naphthylen-1,5-diisocyanat, Toluylendiisocyanate, wie 2,4- bzw. 2,6-Toluylendiisocyanat, N,N'-(4,4'-Dimethyl-3,3'diisocyanatodiphenyl)-uretdion, m-Xylylendiisocyanat, Dicyclohexylmethandiisocyanat, Tetramethylxylylendiisocyanat, aber auch Triisocyanate, wie 4,4,4'-Triisocyanatodiphenylether, 4,4,4'-Triisocyanatotriphenylmethan. Bevorzugt werden, gegebenenfalls in Kombination mit den oben genannten Polyisocyanaten, Isocyanuratgruppen und/oder Biuretgruppen und/oder Allophanatgruppen und/oder Urethangruppen und/oder Uretdiongruppen und/oder Hamstoffgruppen aufweisende Polyisocyanate eingesetzt. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'diisocyanat oder Dicyclohexylmethan-4,4'-diisocyanat, Tetramethylxylylendiisocyanat oder Mischungen aus diesen Polyisocyanaten eingesetzt. Ganz besonders bevorzugt werden als Polyisocyanate Gemische aus Uretdionund/oder Isocyanuratgruppen und/oder Allophanatgruppen aufweisenden Polyisocyanaten auf Basis von Hexamethylendiisocyanat, wie sie durch katalytische Oligomeriserung von Hexamethylendiisocyanat unter Verwendung von geeigneten Katalysatoren entstehen, eingesetzt. Die Polyisocyanatkomponente kann im übrigen auch aus beliebigen Gemischen der beispielhaft genannten Polyisocyanate bestehen.

In einer weiteren bevorzugten Ausführungsform kann als Polyisocyanatkomponente auch ein Prä-Addukt, das das Reaktionsprodukt eines der voranstehend genannten Polyisocyanate mit einer Polyolkomponente, vorzugsweise einer (Poly)hydroxycarbonsäure, ist, eingesetzt werden. Als Prä-Addukte sind Isocyanat-terminale Produkte besonders bevorzugt. Beispiele für Polyolkompoenten, die als Ausgangsverbindungen zur Herstellung des Prä-Addukts eingesetzt werden, sind Diole, wie z. B. Dimethylolpropionsäure, Trishydroxy(alkyl)alkansäuren, Hydroxypivalinsäure. Der Einsatz eines solchen Reaktionsproduktes ermöglicht es, über die Auswahl der Ausgangskomponenten zur Herstellung der Polyisocyanatkomponente in diese hydrophile oder hydrophobe Gruppen einzuführen. Wird beispielsweie als Diolkomponente eine Dihydroxycarbonsäure eingesetzt, so ist es möglich, eine Carboxylgruppe in die Diisocyanatkomponente einzuführen.

Die Mengenverhältnisse der Reaktionskomponenten in Schritt B, d. h. der in Schritt A erhaltene Polyester und die Polyisocyanatkomponente, können über weite Bereiche und in Abhängigkeit von den Reaktionskomponenten gewählt werden. Vorteihafterweise werden die einzelnen Komponenten in solchen Verhältnissen eingesetzt, daß das entstehende Produkt eine stabile Dispersion ergibt. Vorzugsweise werden die Komponenten in solchen Mengen eingesetzt, daß die OH-Gruppen im Verhältnis zu den NCO-Gruppen im Überschuß vorliegen. Enthält die Polyesterkomponente aus Schritt A keine hydrophilen Segmente, wie Polyetheranteile, werden vorzugsweise bis zu 1,1 Molteile polymerer Polyester pro Mol NCO umgesetzt, so daß ein Verhältnis NCO : OH ≤ 1 vorliegt. Wird ein polymerer Polyester mit hydrophilen Segmenten eingesetzt, so können auch mehr als 1,1 Molteile Polyester pro NCO-Equivalent eingesetzt werden.

Der erfindungsgemäße Polyester, der in Schritt B erhalten wird, hat vorzugsweise eine OH-Zahl zwischen 50 und 400, besonders bevorzugt zwischen 50 und 250 und insbesondere zwischen 50 und 150. Die Säurezahl des Produktes liegt in der Regel zwischen 0 und 100. Enthält das Molekül keine oder nur geringe Anteile Polyether-Segmente ist die Säurezahl üblicherweise über 20. Vorzugsweise liegt die Säurezahl unter 60, insbesondere zwischen 20 und 60 und besonders bevorzugt zwischen 25 und 40. Sind auch geeignete Polyetheranteile enthalten, kann die Säurezahl auch kleiner als 20 sein. Die OH-Zahl und die Säurezahl können beispielsweise durch gezielte Auswahl der Monomeren und/oder durch das Verhältnis von NCO-Gruppen zu OH-Gruppen eingestellt werden.

Die Urethanisierungsreaktion im Schritt B erfolgt in an sich bekannter Weise bei erhöhter Temperatur. Vorzugsweise, insbesondere dann wenn die Polyisocyanatkomponente noch weitere reaktive Gruppen, beispielsweise Carboxylgruppen, enthält, sollte die Urethanisierung bei einer Temperatur unter 130° C, vorzugsweise unter 100° C durchgeführt werden.

Die Urethanisierungsreaktion wird vorzugsweise bis zu einem hohen Umsatz durchgeführt, vorzugsweise liegt der Isocyanatgehalt des erhaltenen Reaktionsproduktes unter 0,5, insbesondere unter 0,1 %. Im Anschluß an die Reaktion wird das Reaktionsgemisch mit einer Base neutralisiert. Zur Neutralisierung können Ammoniak und/oder Amine (insbesondere Alkylamine), Aminoalkohole und cyclische Amine, wie Di- und Triethylamin, Dimethylaminoethanolamin, Diisopropanolamin, Morpholin, N-Alkylmorpholin, eingesetzt werden. Für die Neutralisation werden leicht flüchtige Amine bevorzugt.

Das im Reaktionsschritt B erhaltene Reaktionsprodukt, der erfindungsgemäße urethanisierte Polyester kann nach Abschluß der Reaktion in an sich bekannter Weise aufgearbeitet und konfektioniert werden.

Vorzugsweise wird das Reaktionsgemisch nach Beendigung der Reaktion zunächst mit Wasser verdünnt und das organische Lösungsmittel unter Vakuum entfernt. Der Festkörpergehalt des Gemisches kann mit Wasser eingestellt werden. Vorzugsweise wird auf einen Festkörpergehalt von 35 % bis 65 % eingestellt. Der pH-Wert einer solchen erhaltenen Dispersion beträgt zwischen 6,4 und 7,5.

Der erfindungsgemäße urethanisierte Polyester eignet sich hervorragend als Additiv für alle üblichen wäßrigen Lacke, insbesondere für 1-K-Wasserlacke, 2-K-Wasserlacke sowie physikalisch trocknende Wasserlacke. Besonders bevorzugt wird es als Additiv zu Lacken für die Automobilserienlackierung zugesetzt.

### Beispiele

### A. Herstellungsbeispiel für urethanisierten Polyester

### 1. Polyester-Vorprodukt

Für 1 kg Polyester wurden 128,9 g Neopentylglykol, 318,9 g Hydroxypivalinsäureneopentylglykolester, 166,0 g Trimethylolpropan, 205,5 g Isophthalsäure, 40 g Xylol und 254,3 g Hexahydrophthalsäureanhydrid in einen für Polykondensationsreaktionen geeigneten Stahlapparatur eingewogen und kontinuierlich aufgeheizt und das Kondenswasser kontinuierlich entfernt. Bei einer Säurezahl des Produktes von 3 wurde die Reaktion beendet und das Gemisch auf 100° C abgekühlt und mit Methylethylketon (MEK) auf 80 % Festkörper angelöst (Viskosität 50 %ig in MEK 0,2 Pas.)

### 2. Urethanisierte Polyester-Dispersion 1:

In einem für Polyadditionsreaktionen geeigneten Stahlreaktor wurden 488,4 g meta-Tetramethylxylyldiisocyanat, 134,1 g Dimethylolpropionsäure und 568,0 g Methylethylketon eingewogen und auf 80° C aufgeheizt. Bei einem konstanten Isocyanatgehalt von 7,4 % bezogen auf die eingesetzte Mischung kühlte man auf 50° C ab und gab 2110 g der Polyesterlösung zu. Anschließend wurde auf 80° C aufgeheizt. Bei einem Isocyanatgehalt < 0,1 % und einer Viskosität von 3,6 dPas (10:3 in N-Methylpyrrolidon) wurde mit 71,2 g N,N-Dimethylethanolamin neutralisiert. Danach wird mit Wasser verdünnt und das organische Lösemittel unter Vakuum entfernt. Abschließend wurde ein Festkörper von 49,2% mit deionisiertem Wasser eingestellt.
Der pH-Wert der Dispersion betrug 6,8. Die Dispersion war stippenfrei, homogen und mindestens 8 Wochen bei 50° C lagerstabil.

### 3. Urethanisiertes Polyesterharz-Lösung 1:

Es wurde zunächst wie bei der Herstellung des urethanisierten Polyesterharz-Dispersion gearbeitet, mit dem Unterschied, daß das MEK gegen Isopropoxypropanol durch Vakuumdestillation ausgetauscht wurde. Mit Isopropoxypropanol wurde ein Festkörper der Lösung von 64,9 % eingestellt. Das Produkt weist einen pH-Wert von 7,4 und eine Viskosität von 3,9 dPas (10 : 3 in Methylpyrolidon) auf.

## Patentansprüche

1. Verwendung eines urethanisierten Polyesters, der dadurch erhältlich ist, daß in einer Reaktionsstufe (A)
(a) 10 bis 45 Mol-% eines oder mehrerer Diole,
(b) 5 bis 50 Mol-% eines oder mehrerer Polyole mit mindestens 3 OH-Gruppen und
(c) 35 bis 47 Mol-% einer oder mehrerer aromatischer, aliphatischer oder cycloaliphatischer Polycarbonsäuren und/oder deren reaktiven Derivate
in an sich bekannter Weise einer Polykondensationsreaktion unterworfen werden bis das Reaktionsgemisch eine Säurezahl von 1-10 aufweist,
und das erhaltene Reaktionsprodukt in einer Reaktionsstufe (B) in an sich bekannter Weise mit einem organischen Polyisocyanat umgesetzt wird,
als Additiv für wäßrige Lacke zur Erhöhung der rheologischen Stabilität.

2. Verwendung eines urethanisierten Polyesters nach Anspruch 1, **dadurch gekennzeichnet, daß** als Diole Alkylenglykole, aliphatische Polyetherdiole, aromatische und alkylaromatische Diole, Ester von Hydroxycarbonsäuren mit Diolen eingesetzt werden.

3. Verwendung eines urethanisierten Polyesters nach Anspruch 1 oder 2, **dadurch gekennzeichnet, daß** als Polyole mit mindestens drei OH-Gruppen, Trimethylolethan, Trimethylolpropan, Glycerin, Pentaerythrit, Dipentaerythrit, Trishydroxyethytisocyanat, 1,2,4 Butandiol, Propan- und Hexan-Triole und/oder Trihydroxycarbonsäuren, wie Trishydroxymethyl(ethyl)ethansäuren, eingesetzt werden.

4. Verwendung eines urethanisierten Polyesters nach einem der Ansprüche 1 bis 3, **dadurch gekennzeichnet, daß** als Polycarbonsäuren Phthalsäure, Isophthalsäure, Terephthalsäure, Halogenphthalsäure, wie Tetrachlor- bzw. Tetrabromphthalsäure, Adipinsäure, Glutarsäure, Acelainsäure, Sebacinsäure, Fumarsäure, Maleinsäure, Trimellithsäure, Promellithsäure, Pyromellithsäure Tetrahydrophthalsäure, Hexahydrophthalsäure, 1,2-Cyclohexandicarbonsäre, 1,3-Cyclohexandicarbonsäure, 1,4-Cyclohexandicarbonsäure, 4-Me_thylhexahydrophthalsäure, Endomethylentetrahydrophthalsäure, Tricyclodecan-Dicarbonsäure, Endomethylenhexahydrophthalsäure, Camphersäure, Cyclohexantetracarbonsäure, Cyclobutantetracarbonsäure und Gemische der voranstehenden eingesetzt werden.

5. Verwendung eines urethanisierten Polyesters nach einem der Ansprüche 1 bis 4, **dadurch gekennzeichnet, daß** der in Schritt A erhaltene Polyester und die Polyisocyanatkomponente in solchen Mengenverhältnissen eingesetzt werden, daß die OH-Gruppen im Verhältnis zu den NCO-Gruppen im Überschuß vorliegen.

6. Verwendung eines urethanisierten Polyesters nach einem der Ansprüche 1 bis 5, **dadurch gekennzeichnet, daß** der Polyester, der in Schritt (B) erhalten wird, eine Säurezahl zwischen 0 und 100 aufweist.

7. Verwendung eines urethanisierten Polyesters nach einem der Ansprüche 1 bis 6, **dadurch gekennzeichnet, daß** der Polyester, der in Schritt (B) erhalten wird, eine OH-Zahl zwischen 50 und 400 aufweist.

8. Verwendung eines urethanisierten Polyesters nach einem der Ansprüche 1 bis 7, **dadurch gekennzeichnet, daß** das in Schritt (B) eingesetzte organische Isocyanat von 2 bis 5 IsocyanatGruppen pro Molekül aufweist.

9. Verwendung eines urethanisierten Polyesters nach einem der Ansprüche 1 bis 8, **dadurch gekennzeichnet, daß** als Isocyanat ein Addukt aus einem Polyisocyanat und einer Polyolkomponente, insbesondere einer (Poly)hydroxycarbonsäure, eingesetzt wird.

## Claims

1. The use of a urethanized polyester which is obtainable by, in a first reaction stage (A), subjecting
(a) from 10 to 45 mol-% of one or more diols,
(b) from 5 to 50 mol-% of one or more polyols having at least 3 OH groups, and
(c) from 35 to 47 mol-% of one or more aromatic, aliphatic or cycloaliphatic polycarboxylic acids and/or reactive derivatives thereof
to a polycondensation reaction in a manner known per se until the reaction mixture has an acid number of 1-10, and, in a reaction stage (B), reacting the resulting reaction product in a manner known per se with an organic polyisocyanate, as an additive for aqueous coating materials in order to improve the rheological stability.

2. The use of a urethanized polyester as claimed in claim 1, wherein diols employed are alkylene glycols, aliphatic polyether diols, aromatic and alkyl-aromatic diols, esters of hydroxycarboxylic acids with diols.

3. The use of a urethanized polyester as claimed in claim 1 or 2, wherein polyols having at least three OH groups employed are trimethylolethane, trimethylolpropane, glycerol, pentaerythritol, dipentaerythritol, trishydroxyethyl isocyanate, 1,2,4-butanediol, propanetriols and hexanetriols and/or trihydroxycarboxylic acids, such as trishydroxymethyl(ethyl)-ethanoic acids.

4. The use of a urethanized polyester as claimed in one of claims 1 to 3, wherein polycarboxylic acids employed are phthalic acid, isophthalic acid, terephthalic acid, halophthalic acid, such as tetrachloro- and/or tetrabromophthalic acid, adipic acid, glutaric acid, azelaic acid, sebacic acid, fumaric acid, maleic acid, trimellitic acid, pyromellitic acid, tetrahydrophthalic acid, hexahydrophthalic acid, 1,2-cyclohexanedicarboxylic acid, 1,3-cyclohexanedicarboxylic acid, 1,4-cyclohexanedicarboxylic acid, 4-methylhexahydrophthalic acid, endomethylenetetrahydrophthalic acid, tricyclodecane-dicarboxylic acid, endomethylenehexahydrophthalic acid, camphoric acid, cyclohexanetetracarboxylic acid, cyclobutanetetracarboxylic acid, and mixtures of the above.

5. The use of a urethanized polyester as claimed in one of claims 1 to 4, wherein the polyester obtained in step (A) and the polyisocyanate component are employed in quantitative proportions such that the OH groups are in an excess relative to the NCO groups.

6. The use of a urethanized polyester as claimed in one of claims 1 to 5, wherein the polyester obtained in step (B) has an acid number of between 0 and 100.

7. The use of a urethanized polyester as claimed in one of claims 1 to 6, wherein the polyester obtained in step (B) has an OH number of between 50 and 400.

8. The use of a urethanized polyester as claimed in one of claims 1 to 7, wherein the organic isocyanate employed in step (B) has from 2 to 5 isocyanate groups per molecule.

9. The use of a urethanized polyester as claimed in one of claims 1 to 8, wherein an adduct of a polyisocyanate and a polyol component, especially a (poly)hydroxycarboxylic acid, is employed as isocyanate.

## Revendications

1. Utilisation d'un polyester transformé en uréthane, qui peut être obtenu en ce que, dans une étape de réaction (A), on soumet
(a) 10 à 45% en mole d'un ou de plusieurs diols,
(b) 5 à 50% en mole d'un ou de plusieurs polyols présentant au moins 3 groupes OH et
(c) 35 à 47% en mole d'un ou de plusieurs poly(acides carboxyliques) aromatiques, aliphatiques ou cycloaliphatiques et/ou leurs dérivés réactifs, de manière connue en soi, à une réaction de polycondensation jusqu'à ce que le mélange réactionnel présente un indice d'acide de 1 à 10 et, dans une étape de réaction (B), on fait réagir le produit de réaction obtenu de manière connue en soi avec un polyisocyanate organique,
comme additif pour des laques aqueuses pour l'augmentation de la stabilité rhéologique.

2. Utilisation d'un polyester transformé en uréthane selon la revendication 1, **caractérisée en ce qu'**on utilise comme diols des alkylèneglycols, des polyétherdiols aliphatiques, des diols aromatiques et alkylaromatiques, des esters d'acides hydroxycarboxyliques avec des diols.

3. Utilisation d'un polyester transformé en uréthane selon la revendication 1 ou 2, **caractérisée en ce qu'**on utilise comme polyols présentant au moins trois groupes OH le triméthyloléthane, le triméthylolpropane, le glycérol, le pentaérythritol, le dipentaérythritol, le trishydroxyéthylisocyanate, le 1,2,4-butanediol, des propanetriols et des hexanetriols et/ou des acides trihydroxycarboxyliques, tels que les acides trishydroxyméthyl(éthyl)éthanoïques.

4. Utilisation d'un polyester transformé en uréthane selon l'une quelconque des revendications 1 à 3, **caractérisée en ce qu'**on utilise comme poly(acides carboxyliques) l'acide phtalique, l'acide isophtalique, l'acide téréphtalique, un acide halogénophtalique, tel que l'acide tétrachlorophtalique ou l'acide tétrabromophtalique, l'acide adipique, l'acide glutarique, l'acide azélaïque, l'acide sébacique, l'acide fumarique, l'acide maléique, l'acide trimellitique, l'acide promellitique, l'acide pyromellitique, l'acide tétrahydrophtalique, l'acide hexahydrophtalique, l'acide 1,2-cyclohexanedicarboxylique, l'acide 1,3-cyclohexanedicarboxylique, l'acide 1,4-cyclohexanedicarboxylique, l'acide 4-méthylhexahydrophtalique, l'acide endométhylènetétrahydrophtalique, l'acide tricyclodécanedicarboxylique, l'acide endométhylènehexahydrophtalique, l'acide camphorique, l'acide cyclohexanetétracarboxylique, l'acide cyclobutanetétracarboxylique et des mélanges des acides susmentionnés.

5. Utilisation d'un polyester transformé en uréthane selon l'une quelconque des revendications 1 à 4, **caractérisée en ce que** le polyester obtenu dans l'étape A et le composant polyisocyanate sont utilisés dans des rapports de quantité tels que les groupes OH sont en excès par rapport aux groupes NCO.

6. Utilisation d'un polyester transformé en uréthane selon l'une quelconque des revendications 1 à 5, **caractérisée en ce que** le polyester obtenu dans l'étape (B) présente un indice d'acide entre 0 et 100.

7. Utilisation d'un polyester transformé en uréthane selon l'une quelconque des revendications 1 à 6, **caractérisée en ce que** le polyester obtenu dans l'étape (B) présente un indice OH entre 50 et 400.

8. Utilisation d'un polyester transformé en uréthane selon l'une quelconque des revendications 1 à 7, **caractérisée en ce que** l'isocyanate organique utilisé dans l'étape (B) présente 2 à 5 groupes isocyanate par molécule.

9. Utilisation d'un polyester transformé en uréthane selon l'une quelconque des revendications 1 à 8, **caractérisée en ce qu'**on utilise comme isocyanate un produit d'addition d'un polyisocyanate et d'un composant polyol, en particulier d'un (poly)acide hydroxycarboxylique.
